# EUROPEAN PATENT SPECIFICATION

(11) **EP 2 891 329 B1**
(45) Date of publication and mention of the grant of the patent: **28.09.2016**
(21) Application number: 12762210.8
(22) Date of filing: 30.08.2012
(51) Int. Cl.: B60Q 9/00, H04R 3/12, H04S 7/00, G01S 19/14

(54) **PRESENTATION OF AN AUDIBLE MESSAGE IN A VEHICLE**
DARSTELLUNG EINER AUDIOHINWEISNACHRICHT IN EINEM FAHRZEUG
PRÉSENTATION D'UN MESSAGE AUDIBLE DANS UN VÉHICULE

(43) Date of publication of application: 08.07.2015
(73) Proprietor: Volvo Truck Corporation, 405 08 Göteborg (SE)
(72) Inventor: HELLAKER, Jan, Virginia Beach 23451 (SE); JARLENGRIP, Johan, S-436 45 Askim (SE)
(74) Representative: Volvo Technology Corporation
(86) International application number: PCT/EP2012/003639
(87) International publication number: WO 2014/032681

(56) References cited:
- US-A- 6 087 961
- US-A1- 2010 273 505

## Description

### TECHNICAL FIELD

The present invention relates to improvements in relation to communication system for providing an audible message to a driver of a vehicle, specifically in relation to a driver of a commercial vehicle such as a truck.

### BACKGROUND OF THE INVENTION

Being a commercial driver, such as a truck driver, is traditionally a rather solitary profession, as most of the time spent at work is alone in the vehicle. However, in early 1960ies the Citizens' Band, more commonly known as "CB radio" or as below just "CB", found its way into many trucks and provided the drivers with a communication means which partly alleviated the solitariness of the profession. CB allows a driver to communicate with another driver within the range of about 10 km if the terrain is decent.

Although the technology within social communications has developed substantially over the last 20 years, many truck drivers still use CB as their primary social communication means. However, the digital development of social communication presents many advantages over the CB technology.

Thus, there is a need for a communication system for vehicles with audible communication means adapted for commercial drivers such as truck drivers that provide an improved approach for presenting audible communication to further facilitate the driver during a route.

### SUMMARY OF THE INVENTION

The object of the invention is to achieve a communication system adapted for vehicles, where the communication system provides communication as at least one audio message to a driver in a vehicle compartment.

According to an aspect of the invention, the above is at least partly met by a communication system for a vehicle compartment of a first vehicle as according to claim 1.

A communication system not adapted for vehicles is shown in document US 2010/0273505.

The invention is based on the insight that drivers driving e.g. commercial vehicles often communicates with each other during their route, due to their profession, for instance regarding the weather and the road conditions. Furthermore, the inventors have realized that it would be beneficial for the driver to have audible messages presented in such a way that the driver is alleviated in the determination of a geographical component of the audible messages. By presenting the information to the driver in a way that reflects at least one of the geographical positions of the remotely arranged communication unit or a geographical component of the audible message the driver may instantly know whether the information presented is relevant. The communication unit may act as a source generating the audible message.

For instance, the audible message may communicate information concerning a traffic accident, and hence if the driver receives the message from speakers configured to output sound such that the driver perceives the sound originating from behind, the driver may disregard it. However, had the same message been presented as originating from ahead of the driver, the driver may automatically place more focus on the road ahead. By being able to determine the direction of the position of communication unit, the safety aspects may be improved for all road-users. Furthermore, the communication system may as well facilitate the driver during a route by providing driving instructions or other information given by other drivers. Accordingly, by presenting the messages as audio from a direction corresponding to the positions of the communication unit, it may be possible to further assist the driver to avoid detours.

In relation to the present invention, a remotely arranged communication unit should be interpreted as a device able to communicate messages to the communication system to be presented as an audible message in the vehicle compartment. The communication unit may for example be a mobile phone or another communication means provided with internet telephony.

The first vehicle may for example be a transportation vehicle for land, air or sea, such as for example a truck, a plane or a vessel. The communication system may however also be implemented in a car, a boat or another type of transportation vehicle benefitting from communication.

According to an embodiment of the invention, the geographical position coupled to the audible message is determined by detecting a geographical position of the communication unit.

The communication system, more specifically the control unit in the step of determining the geographical position of the communication unit, may request a geographical position of the communication unit which is transmitted from the communication system to the communication unit and/or receive information regarding the relevant geographical position of the audible message from a geographical component incorporated in the received audible message.

According to the invention, the control unit is further configured to detect a geographical vector of the first vehicle based on the movement of the first vehicle.

By detecting a geographical vector of the first vehicle, the driving direction of the first vehicle may be determined. This information may further assist the control unit in assigning the most suitable speaker for transmitting the received audible message to the driver. By determining the driving direction of the first vehicle, the assigned speaker may imitate the spatial relation of the communication unit or the geographical position coupled to the audible message and the first vehicle in relation to the driver when seated in a typical driving position.

According to an embodiment of the invention, the control unit may further be configured to detect a geographical vector of the communication unit based on the movement of the communication unit.

By detecting a geographical vector it is possible to determine whether the communication unit is approaching the first vehicle and is driving in the opposite direction or is heading in the same direction as the first vehicle.

According to an embodiment of the invention, the control unit may be further configured to provide a sound effect to the audible message provided to the driver and alter the assigned speaker to at least one of the plurality of speakers when the communication unit passes the first vehicle based on the geographical vectors and the geographical positions.

The communication system may process the audible message such that the audible message presented to the driver includes a sound effect to alert the driver that the communication unit is about to pass the first vehicle, besides altering the assigned speaker due to the change in spatial relation between the communication unit and the first vehicle. The sound effect may for instance be an included sound in the background of the audible message presented to the driver or adapt the audible message itself. The sound effect may emulate a Doppler sound when the communication unit is about to pass the first vehicle. The sound effect may alter its frequency depending on whether the communication unit is approaching or has passed the first vehicle. The frequency of the Doppler sound may be arranged to be lower when the communication unit is approaching the first vehicle while the frequency shifts to a higher frequency after the communication unit has passed the first vehicle.

According to an embodiment of the invention, the communication system may communicate with a plurality of remotely arranged communication units and the control unit may be configured to assign at least one speaker of the plurality of speakers for each of the communication units based on the spatial relation between said first vehicle and the geographical position coupled to the audible message for each communication unit.

The communication system may further be configured to operate with a plurality of communication units. Furthermore, the communication system may be able to provide simultaneous communication, which means that the plurality of communication units may provide audible messages simultaneously that may be provided to the driver at the same time. An advantage with this embodiment is that by assigning different speakers for each communication unit, while still bearing in mind the spatial relation, the driver may differentiate between each different communication unit due to that sound reaches the driver from different directions depending on the assigned speaker(s).

The plurality of communication units may for example all be arranged behind the first vehicle, which may for example be the case in a convoy of trucks. Then, each communication unit may be assigned to a speaker of the plurality of unassigned speakers configured to provide sound perceived by the driver to originate from behind the same. However, if the plurality of communication units, located behind the first vehicle, outnumbers the plurality of unassigned speakers able to produce sound perceived as coming from behind the driver, a number of the plurality of communication units may share a speaker.

Furthermore, a plurality of speakers may interact to create directional sound in more directions than there are speakers. The driver may perceive the created directional sound, coming from the interacting speakers, as originating from a direction within the vehicle compartment with no speakers. This may enable several audible messages to be distinguished from the direction in which the sound is being presented to the driver based on the geographical position coupled to the audible message, even in the case when the number of speakers is limited to a few speakers and the number of audible messages exceeds the number of speakers.

According to an embodiment of the invention, the communication unit may be comprised in a corresponding communication system arranged in a second vehicle. An advantage with this embodiment is that it may allow the driver to receive information regarding the traffic situation further along the road, when e.g. a second driver drives another vehicle provided with a corresponding communication system on the same road at a distance in front of the driver. The at least one assigned speaker may be altered for received audible messages originating from the same communication unit when, e.g. the communication unit incorporated in the second vehicle passes the first vehicle or otherwise alter its position in relation to the first vehicle such that another speaker of the plurality of speakers is viewed as the most suitable.

According to the invention, the communication system further comprises a microphone configured to receive a further audible message from the driver, and the control unit is further configured to transmit the further audible message to the communication unit.

By providing a microphone to the communication system, two-way communication is enabled which allows the driver to contribute with output messages to other communication units. The communication system may of course be able to handle two-way simultaneous communication, which may be interpreted as the possibility for a plurality of bi-directional messages to be transmitted at the same time.

According to an embodiment of the invention, the communication system may comprise a wireless communication device such as a mobile phone for flexible use of a second vehicle configured with a second communication system.

An advantage with this embodiment is that the driver's mobile phone may connect (e.g. "dock") to the communication system in the vehicle compartment such that the control unit may communicate with the communication units via the mobile phone. The wireless communication device may be for instance be a smart phone, a PC or a hand-held computer adapted for communication over internet, a local area network, VoIP, GSM, 3G or 4G. Furthermore, by being able to dock a wireless communication device in a plurality of communication system, settings determined by the driver may be stored in the wireless communication device so that the settings remain when the driver changes vehicle. The settings may e.g. be a user name to identify the driver to other drivers. The microphone may be arranged in the wireless communication device.

According to an embodiment of the invention, the message from the remotely arranged communication unit may be at least one of a voice message and an audible converted text message.

Accordingly, the message may be a verbal message received from e.g. a person or alternatively the message received by the sound communication system may be a text message, such as a short message service from a mobile phone. The control unit may comprise software able to turn text messages into audio. The voice message and text messages may be transmitted by the control unit using VoIP, GSM, 3G, 4G, a local area network such as WLAN, WI-FI, Ethernet, Bluetooth etc. or any type of communication over the internet that allows voice and/or text message to be transmitted in real-time. The audible converted text message may be converted from text to an audible message prior to the control unit receiving the message. The control unit may further be configured to receive an audible message broadcasted, such as e.g. RDS (Radio Data System) or RBDS (Radio Broadcast Data System) embedding digital information in conventional broadcasts. Typical messages that may be broadcasted are messages concerning the traffic situation, e.g. if a traffic accident has occurred or there is obstruction of traffic.

According to an embodiment of the invention, the received audible message may be a geomessage limited by a validity term assigned to the geomessage. The validity term may comprise a limitation to a geographical area and/or a limitation in time.

The control unit may be configured to receive the geomessage when said first vehicle is within the geographical area during a predetermined time period. An advantage with this embodiment is that the geomessage includes coordinates for the position where the geomessage was transmitted, such that a driver may receive a message when it is relevant for the driver in the first vehicle. A driver may output a geomessage comprising tips, for example at a roadside filling station with moderately priced petrol, such that other drivers may benefit of this information and the knowledge of what direction the roadside filling station is located. A geomessage limited to a predetermined time period should be interpreted as the time period for which the geomessage is valid and the time for which other drivers may receive the geomessage. The predetermined time period may differ depending on the type of message. Geomessages may for example comprise information about road conditions, weather and traffic situation. A further discussion in relation to geomessages will be given below in relation to the detailed description of the invention.

According to an embodiment of the invention, the control unit may comprise an audio gain control configured to control a volume level for each of the plurality of speakers and the control unit may further be configured to adjust the volume level for each of said assigned speakers based on the spatial relation between the geographical position of the communication system (100) and a geographical position coupled to the audible message. The spatial relation may also include the distance between the communication unit or the geographical position coupled to the audible message and the first vehicle. The audible message may be presented to the driver with an adapted volume level of the speaker assigned to provide the audible message to the driver, depending on the distance between the first vehicle and the communication unit, by adjusting the audio gain control. The volume level may be adjusted based on the spatial relation; a lower volume level indicates a communication unit further away from the first vehicle. The driver may further adjust the volume level that may correspond to a distance from the first vehicle. The volume may increase as the communication unit approaches the first vehicle while decreasing it when the communication unit has passed the first vehicle.

According to an embodiment of the invention, the geographical positions coupled to the audible message and the first vehicle may be determined by coordinates provided by means of a tracking system to the control unit. The coordinates provided by the tracking system are coordinates from a geographic coordinate system usually described by longitude and latitude.

According to an embodiment of the invention, the tracking system may be one of a satellite navigation system, a system using triangulation by means of local area networks or a mobile tracking system. The tracking system may be a satellite navigation system, such as a global positioning system using satellites to determine the geographical locations of the communication unit and the first vehicle. Satellite navigation system uses a time difference for a signal to reach different satellites in order to determine the geographical position of an object.

Alternatively, the tracking system may be a mobile tracking system configured to use multilateration of radio signals between a set of base stations and antennas towers and object, being either the vehicle or the communication unit, in order to receive the coordinates.

According to a further aspect of the invention there is provided a method for a communication system arranged of a vehicle compartment as according to claim 13. Further effects and features of this aspect are largely analogous to those described above in relation to the embodiments of the previous aspect.

According to a still further aspect of the invention there is provided a program product comprising a computer readable medium having stored thereon computer program means as according to claim 14. Further effects and features of this aspect are largely analogous to those described above in relation to the embodiments of the previous aspect.

The control unit may preferably be provided in a computer device or similarly, and the computer readable medium may be one of a removable nonvolatile random access memory, a hard disk drive, a floppy disk, a CD-ROM, a DVD-ROM, a USB memory, an SD memory card, or a similar computer readable medium known in the art. The present invention may be implemented using a combination of software and hardware elements. The control unit has software able to determine, i.e. spatial relation between the vehicle and the communication unit.

The control unit may further comprise information regarding which of the plurality of speakers that may be assigned for a specific spatial relation. This information may be stored in a database. As above, features of this aspect of the invention provide similar advantages as discussed above in relation to the previous aspects of the invention.

Further features of, and advantages with, the present invention will become apparent when studying the appended claims and the following description. The skilled addressee realize that different features of the present invention may be combined to create embodiments other than those described in the following, without departing from the scope of the present invention.

### BRIEF DESCRIPTION OF THE DRAWINGS

The various aspects of the invention, including its particular features and advantages, will be readily understood from the following detailed description and the accompanying drawings, in which:
Fig. 1 schematically illustrates a communication system between a plurality of vehicles;
Fig. 2 schematically illustrates a vehicle compartment with a communication system.
Fig. 3 schematically illustrates a flow chart of a method according to one embodiment; and
Fig. 4 schematically illustrates a map with geomessages according to one embodiment.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

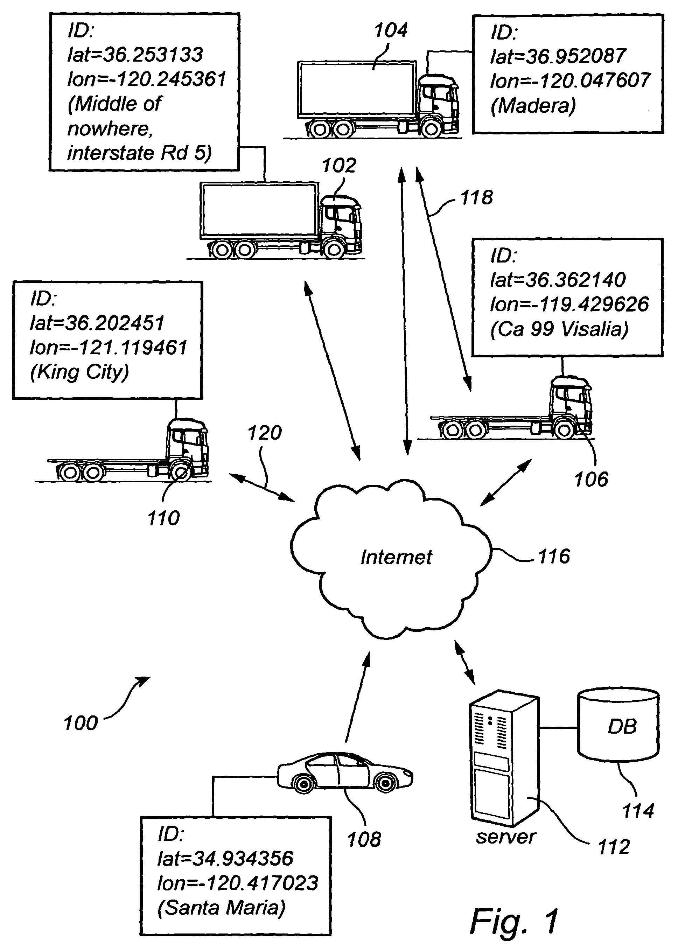

Fig. 1 shows how communication between five vehicles may be arranged within a communication system 100 for using in relation to the invention. Fig. 1 illustrates two trucks 102, 104, two tractor units 106, 110 and a car 108. Each vehicle is associated with a name and a geographical position as indicated on the corresponding labels. Further, the figure illustrates the Internet 116, a server 112 and a database 114. The data communication between the vehicles may be conducted by means of a peer-to-peer connection 118 as illustrated between the second truck 104 and the first tractor unit without attached trailers 106. Alternatively, the communication may be centralized communication 120 achieved via e.g. Internet 116, as indicated by the communication lines 120 going from the different vehicles to the internet 116 and back to the vehicles. Further, the vehicles may also communicate with the server 112 and may utilize the database 114.

Moreover, the communication transmitted between the vehicles 102, 104, 106, 108, 110 may be transmitted by transmitting means using VoIP, GSM, 3G, 4G or any type of communication over the internet 106 that allows voice and/or text to be transmitted. Further the communication may for example be transferred over internet or local area networks such as WLAN, WI-FI, Ethernet, Bluetooth,

In the example the five vehicles are all located in California along CA99, CA101 and Interstate 5. The geographical position of the first truck 102, illustrated in the center of Fig. 1, is on the highway Interstate 5 with coordinates latitude 36.253133 and longitude -120.245361. The second truck 104 is located on CA 99 outside Madera with coordinates latitude 36.952087 and longitude -120.047607. The first tractor unit 106 is located on Ca 99 outside Visalia with coordinates latitude 36.362140 and longitude - 119.429626. The car 108 is located one CA101 outside Santa Maria with coordinates latitude 34.934356 and longitude -120.417023. Finally the second tractor unit 110 is located on CA101 outside King City with the coordinates latitude 36.202451 and longitude -121.119461. If the first truck 102 is chosen as a reference point, the second truck 104 is located to the north, the first tractor unit 106 located to the east, the car 108 located to the south and the second tractor unit 110 located to the west. The geographical position of the server 112 and database 114 is not relevant for the inventive concept. For convenience, below, the first truck 102 will be written as the "first vehicle 102".

Obviously, the selected types of vehicles are merely examples, and each vehicle may be any type of vehicle without departing from the inventive concept.

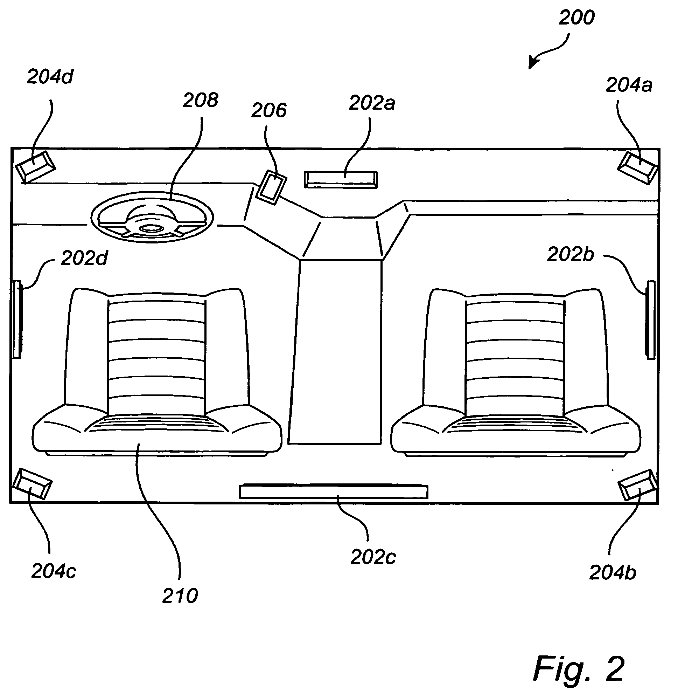

Fig. 2 schematically illustrates the vehicle compartment 200 of the first vehicle 102 comprising a communication system. The communication system comprises a plurality of speakers 202 a-d, 204a-d and a control unit (not shown). Four speakers 202 a-d are arranged along each side of the vehicle compartment 200, while each of four other speakers 204a-d are arranged in e.g. each corners of the vehicle compartment. For example, a speaker 202a may be arranged in the control panel, i.e. the front of the vehicle compartment 200 beside the steering wheel 208, while another speaker 204a may be arranged in the front right corner of the compartment 200.

However, the number and the positions of the speakers 202 a-d, 204a-d in the vehicle compartment are merely examples, and another number of speakers and other positions may equally well be possible without departing from the inventive concept. Though, the speakers may preferably be distributed around the seat of the driver 210 to enable the driver to distinguish between the sound directions of two speakers assigned to provide different audible messages, such as the each of four speakers 202a-d arranged along one side of the vehicle compartment.

The geographical position of the communication units configured in the truck 104, the two tractor units 106, 110 and in a car 108, in fig. 1, may be determined by the control unit requesting information of the geographical position from the communication units and/or by receiving a geographical component in the audible message.

The communication system may further comprise a wireless communication device 206, such as a smart phone, the wireless communication device is connected to the communication system through a docking station. However, the wireless communication device 206 may equally well be a computer or a hand-hold computer. In future reference the communication device will be referred to as a "smart phone 206".

By being able to remove the smart phone 206 from the communication system, the communication system may increase its flexibility, the smart phone 206 may be able to store settings specific to the driver such that when changing vehicle the specific setting may still remain in the new communication system. Otherwise, when not connected to the communication system, the smart phone 206 may be utilized as the driver's mobile phone. As an optional feature of the communication system, the communication system may include a microphone enabling the driver to output a further message as an audible message. The control unit may transfer the message recorded by the microphone to the remotely arranged communication units 104, 106, 108, 110. When utilizing a smart phone 206 in the communication system the microphone is integrated in the smart phone 206.

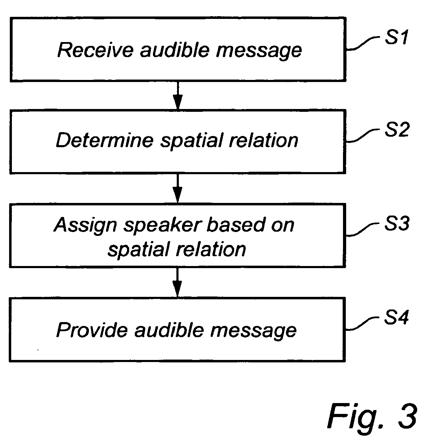

In Fig. 3, a method for distributing an audible message to a driver of the vehicle is illustrated in a number of steps. Each step is associated with a reference number, however, the steps do not necessarily need to be performed in the order of the reference signs.

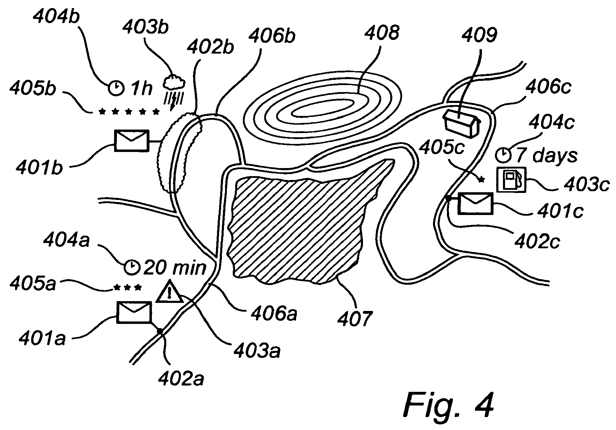

The first step S1 is receiving an audible message in the first vehicle 102 from a communication unit. The communication units may be any one of the other trucks and vehicles 104, 106, 108, 110 illustrated in Fig 1, apart from the first vehicle. As mentioned above the received audible message may be either a text message or a voice message. Furthermore, the received audible message may be a geomessage 401 which will be described in more detail with regard to Fig. 4. The control unit may further receive a broadcasted audible message.

Moreover, Fig. 3 illustrates the step S2 of determining the spatial relation of the geographical positions which may be achieved by determining a geographical position of the first vehicle comprising a communication system and determining a geographical position coupled to the audible message. The communication system 100 may transmit a request to the communication unit for information regarding the geographical position of the communication unit or receive a geographical position in the audible message. This step may be achieved by a number of different positioning systems such as global positioning system (GPS), GLONASS, Galileo, Compass navigation system, or any other positioning system. Moreover, triangulation techniques for use in e.g. mobile phone tracking and local area networks may be used or any other technology for establishing a geographical position. The determination of a geographical position of the first vehicle 102 in Fig 1 may be achieved by the same means as for the step S2 of determining a geographical position of the communication unit. The step S3 of determining a geographical position of the first vehicle 102 may further comprise the determining a geographical vector of the first vehicle. By determining the geographical vector of the first vehicle, the assigned speaker for generating directional sound may imitate the spatial relation between the first vehicle 102 and the communication unit within the vehicle compartment such that the speaker correspond to the communication unit while the driver in the seat of the driver 210 corresponds to the first vehicle 102. This may also be achieved by means of integrated or external equipment. The purpose of determining a spatial relation between the first vehicle 102 and the communication unit, which may be any one of the other vehicles, trucks and tractor units in Fig. 1, is to determine a direction of the communication unit in order to present additional information to the driver in the first vehicle besides the audible message.

Further, the flow chart in Fig. 3 shows the step S3 of assigning a speaker or speakers based on the spatial relation between the geographical component of the audible message. The geographical component may be the geographical position of the communication unit, or a geographical position couple to the audible message. The geographical component may further be received by the communication unit forwarding information regarding the geographical position. The control unit may also send out a request regarding a question of the geographical position or the control unit may receive the geographical position as incorporated in the audible message. If the first vehicle receives an audible message from the second truck 104, located on CA 99 outside Madera with coordinates latitude 36.952087 and longitude - 120.047607, the spatial relation is that the second vehicle 104 is arranged to the north of the first vehicle. The communication system may be arranged to assign a speaker in the vehicle compartment driver based on the cardinal points, the speaker 202a arranged at the front of the vehicle compartment beside the steering wheel 208 may output messages from communication units north of the first vehicle 102. The speaker 202b on the right hand side in Fig. 2 may provide messages from vehicles arranged east of the first vehicle 102. The driver may then identify the relation of the different communication units to the vehicle. However, a geographical position of the first vehicle 102 and a geographical vector of the first vehicle 102 may also be determined. This may also be achieved by means of integrated or external equipment. The purpose of determining the geographical vector is mainly to complement the geographical position with a direction. Thereby, it may be determined not only where on the road the first vehicle 102 is located, but also in what direction the first vehicle 102 is travelling. By determining the direction of the first vehicle 102, at least one of the speakers 202a-d, 204a-d may be assigned to imitate the spatial relation of the first vehicle 102 and the communication unit in the vehicle compartment. The driver in the driver's seat 210 may, thus, correspond to the first vehicle 102, while the assigned speaker corresponds to the communication unit. The control unit may comprise a reference system of the position of the plurality of speakers 202a-d, 204a-d compared the driver's seat 210 such that the assigned speaker reflect the direction of the communication unit with regard to the vehicle 102. For instance, the communication system may assign one of the speakers 202d, 204d, 204c located to the left of the driver's seat 210, when a communication unit, located to the left of the driver in the driver's seat 210, transfers an audible message to the communication system.

The step S3 of assigning a speaker for generating directional sound within the vehicle compartment relating to the spatial relation for both the case with and without the geographical vector may be achieved by means of integrated software in the control unit or from accessing software from an external source via e.g. internet.

The final step S4 is to provide the audible message to the driver from the at least one assigned speaker. Otherwise, if the received audible message is an audio message, the message is simply transferred to the driver from the assigned speaker(s). The driver in the vehicle compartment may instantaneously perceive the spatial relation of the communication units depending on from which of the speakers the audible message is outputted. Moreover, the audio gain may further be adjusted to indicate the distance of the communication unit to the first vehicle. The volume level may be increased or decreased to correspond to a distance from the first vehicle 102. For instance, when the first vehicle is in communication with the communication units, being the second truck 104 and the car 108, the audible message from the car 108 may be provided with a lower volume than the message from the second truck. The volume may be adjusted to indicate, to the driver, that the car 108 is further away compared to the second truck 104. The volume may also be adjusted based on the distance, such that a distance range corresponds to a specific volume level.

Fig. 4 shows a map of comprising roads 406a, 406b, 406c, a lake 407, a mountain408 and a building 409, and the map has several geomessages 401 a, 401 b, 401 c placed on the roads 406a, 406b, 406c, respectively. Obviously this map is a mock-up and in other embodiments there are also other objects on the map, such as other buildings, rivers, airports etc. Each geomessage 401 a, 401 b, 401 c has a geographical position 402a, 402b, 403. In two of the cases the geographical position 402a, 402c are specific points, meanwhile the third geographical position 402b is a geographical region. Further, each geomessage 401 a, 401b, 401c is associated with an event 403a, 403b, 403c. In the map as shown in fig. 2 the events 403a, 403b, 403c are illustrated with small icons indicating an accident, a storm and a gas station, respectively. Further, each geomessage has a validity term 404a, 404b, 404c indicated by a time indicator, which indicates 20 min, 1 hour and 7 days respectively. As described before, the validity term may also be indicated by a geographical region in another embodiment.

Finally, each geomessage 401 a, 401b, 401c is associated with a rating 405a, indicated by a number of stars. The step of determining a rating level for the geomessage is an optional application for the receiver of the geomessage. The overall purpose of having a rating of the geomessage 401 is to increase the probability of relevance of a geomessage 401 for a receiver.

For example, a generated geomessage 401 regarding a traffic situation or a weather condition such a rain that causes the windscreen wiper to activate may have a predetermined time period of 15 minutes. This is further an example of a geomessage 401 that may be automatically created by a certain event, in this case the activation of wipers. However, geomessages 401 may also be manually posted by the driver to share tips with other drivers.

Even though the invention has been described with reference to specific exemplifying embodiments thereof, many different alterations, modifications and the like will become apparent for those skilled in the art. Variations to the disclosed embodiments can be understood and effected by the skilled addressee in practicing the claimed invention, from a study of the drawings, the disclosure, and the appended claims. For example, the invention has mainly been described above with reference to a few embodiments. However, as is readily appreciated by the skilled addressee, other embodiments than the ones disclosed above are equally possible within the scope of the invention, as defined by the appended patent claims. For example, the invention is also applicable for trucks, buses, dumpers, wheel loaders and other type of vehicles than the above described car.

In the claims, the word "comprises" does not exclude other elements or steps, and the indefinite article "a" or "an" does not exclude a plurality. A single computer or other unit may fulfill the functions of several items recited in the claims. The mere fact that certain measures are recited in mutually different dependent claims does not indicate that a combination of these measured cannot be used to advantage.

## Claims

1. A communication system (100) for a vehicle compartment (200) of a first vehicle (102), the communication system (100) configured to provide an audible message to a driver of the first vehicle (102), wherein the communication system (100) comprises:
- a plurality of speakers (202 a-d, 204 a-d) spatially distributed apart from each other within the vehicle compartment (200); and
- a control unit for controlling the plurality of speakers (202 a-d, 204 a- d),
wherein the control unit is configured to:
- receive the audible message from a communication unit arranged remotely from the first vehicle (102);
- determine a spatial relation between the geographical position of said communication system (100) in the first vehicle and a geographical position coupled said audible message;
- assign at least one of said plurality of speakers (202 a-d, 204 a-d) for generating directional sound towards the driver within the vehicle compartment (200), the direction of the sound corresponding to the spatial relation between said communication system (100) in the first vehicle and said geographical position coupled to said audible message; and
- provide the audible message to the driver from said at least one assigned speaker, wherein the communication system (100) for two-way communication further comprises a microphone configured to receive an audible output message from the driver of the first vehicle (102) and the control unit is further configured to transmit the audible output message to said communication unit, wherein the control unit is further configured to detect a geographical vector of the first vehicle (102) based on the movement of the first vehicle (102).

2. The communication system (100) according to claim 1, wherein the geographical position coupled to said audible message is determined by detecting a geographical position of the communication unit.

3. The communication system (100) according to any one of claims 1 or 2, wherein the control unit is further configured to detect a geographical vector of the communication unit based on the movement of the communication unit.

4. The communication system (100) according to claim 2 , wherein the control unit is further configured to provide a sound effect to the audible message provided to the driver when the first vehicle (102) and communication unit passes each other based on the geographical vectors and the geographical positions.

5. The communication system (100) according to any one of the preceding claims, wherein said communication system (100) communicates with a plurality of remotely arranged communication units and wherein the control unit is configured to assign at least one speaker of a plurality of unassigned speakers for each of said communication units based on the spatial relation between said first vehicle (102) and said geographical position coupled to said audible message for each communication unit.

6. The communication system (100) according to any one of the preceding claims, wherein the remotely arranged communication unit is comprised in a second communication system (100) arranged in a second vehicle (104, 106, 108, 110).

7. The communication system (100) according to any one of the preceding claims, wherein said communication system (100) comprises a wireless communication device (206) such as a mobile phone for flexible use of a second vehicle configured with a second communication system.

8. The communication system (100) according to any one of the preceding claims, wherein the audible message from said communication unit is at least one of a voice message and an audible converted text message.

9. The communication system (100) according to any one of the preceding claims, wherein the received audible message is a geomessage (401) limited by a validity term assigned to the geomessage (401).

10. The communication system (100) according to any one of the preceding claims, wherein the control unit comprises an audio gain control configured to control a volume level for each of the plurality of speakers (202 a-d, 204 a-d) and wherein the control unit is further configured to adjust the volume level for each of said assigned speakers based on the spatial relation between the geographical position of said communication system (100) and a geographical position coupled to said audible message.

11. The communication system (100) according to any one of the preceding claims, wherein the geographical positions coupled to the audible message and said first vehicle (102) are determined by coordinates provided by means of a tracking system to the control unit.

12. The communication system (100) according to claim 10, wherein the tracking system is one of a satellite navigation system or a mobile tracking system.

13. A method for a communication system (100) arranged of a first vehicle (102) compartment and comprising a plurality of speakers (202 a-d, 204 a-d) spatially distributed apart from each other, the method provided for distributing an audible message to a driver of the vehicle, the method comprising the steps of:
- receiving said audible message from a communication unit arranged remotely from the first vehicle (102);
- determining a spatial relation between the geographical position of said communication system (100) and a geographical position coupled to said audible message;
- determining a geographical vector of the first vehicle (102) based on the movement of the first vehicle (102);
- assigning at least one of said plurality of speakers (202 a-d, 204 a-d) for generating directional sound towards the driver within the vehicle compartment (200), the direction of the sound corresponding to the spatial relation between said communication system (100) in the first vehicle and said geographical position coupled to said audible message; and
- providing the audible message to the driver from said at least one assigned speaker, wherein the communication system (100) for two-way communication further comprises a microphone configured to receive an audible output message from the driver of the first vehicle (102) and the control unit is further configured to transmit the audible output message to said communication unit.

14. Computer program product comprising a computer readable medium having stored thereon computer program means for a communication system (100) for a vehicle compartment (200) in a first vehicle (102), wherein the communication system (100) comprises a plurality of speakers (202 a-d, 204 a-d) spatially distributed configured to provide an audible message to a driver in a vehicle, wherein the computer program product comprises:
- code for receiving said audible message from a communication unit arranged remotely from the first vehicle (102);
- code for determining a spatial relation between the geographical position of said communication system (100) and a geographical position coupled to said audible message;
- code for determining a geographical vector of the first vehicle (102) based on the movement of the first vehicle (102);
- code for assigning at least one of said plurality of speakers (202 a-d, 204 a-d) for generating directional sound towards the driver within the vehicle compartment (200), the direction of the sound corresponding to the spatial relation between said communication system (100) in the first vehicle and said geographical position coupled to said audible message; and
- code for providing the audible message to the driver from said at least one assigned speaker, wherein the communication system (100) for two-way communication further comprises a microphone configured to receive an audible output message from the driver of the first vehicle (102) and the control unit is further configured to transmit the audible output message to said communication unit.

## Patentansprüche

1. Kommunikationssystem (100) für einen Fahrzeugraum (200) eines ersten Fahrzeugs (102), wobei das Kommunikationssystem (100) dazu konfiguriert ist, eine Audionachricht für einen Fahrer des ersten Fahrzeugs (102) bereitzustellen, wobei das Kommunikationssystem (100) umfasst:
- eine Vielzahl von Lautsprechern (202 a-d, 204 a-d), die getrennt voneinander in dem Fahrzeugraum (200) räumlich verteilt sind; und
- eine Steuereinheit zum Steuern der Vielzahl von Lautsprechern (202 a-d, 204 a-d), wobei die Steuereinheit konfiguriert ist für das
- Empfangen der Audionachricht von einer Kommunikationseinheit, die entfernt von dem ersten Fahrzeug (102) angeordnet ist;
- Bestimmen einer räumlichen Beziehung zwischen der geographischen Position des Kommunikationssystems (100) in dem ersten Fahrzeug und einer mit der Audionachricht gekoppelten geographischen Position;
- Zuordnen wenigstens eines der Vielzahl von Lautsprechern (202 a-d, 204 a-d) zum Erzeugen eines gerichteten Tons an den Fahrer in dem Fahrzeugraum (200), wobei die Richtung des Tons der räumlichen Beziehung zwischen dem Kommunikationssystem (100) in dem ersten Fahrzeug und der mit der Audionachricht gekoppelten geographischen Position entspricht; und
- Bereitstellen der Audionachricht an den Fahrer von dem wenigstens einen zugeordneten Lautsprecher, wobei das Kommunikationssystem (100) für eine Zwei-Wege-Kommunikation weiterhin ein Mikrofon umfasst, das für den Empfang einer Audioausgangsnachricht von dem Fahrer des ersten Fahrzeugs (102) konfiguriert ist, und die Steuereinheit weiterhin zum Übertragen der Audioausgangsnachricht an die Kommunikationseinheit konfiguriert ist, wobei die Steuereinheit weiterhin für das Erfassen eines geographischen Vektors des ersten Fahrzeugs (102) auf der Basis der Bewegung des ersten Fahrzeugs (102) konfiguriert ist.

2. Kommunikationssystem (100) nach Anspruch 1, bei dem die mit der Audionachricht gekoppelte geographische Position durch Erfassen einer geographischen Position der Kommunikationseinheit bestimmt wird.

3. Kommunikationssystem (100) nach irgendeinem der Ansprüche 1 oder 2, bei dem die Steuereinheit weiterhin dazu konfiguriert ist, einen geographischen Vektor der Kommunikationseinheit auf der Basis der Bewegung der Kommunikationseinheit zu erfassen.

4. Kommunikationssystem (100) nach Anspruch 2, bei dem die Steuereinheit weiterhin dazu konfiguriert ist, die an den Fahrer bereitgestellte Audionachricht mit einem Toneffekt zu versehen, wenn das erste Fahrzeug (102) und die Kommunikationseinheit auf der Basis der geographischen Vektoren und der geographischen Positionen aneinander vorbeifahren.

5. Kommunikationssystem (100) nach irgendeinem der vorhergehenden Ansprüche, bei dem das Kommunikationssystem (100) mit einer Vielzahl von entfernt angeordneten Kommunikationseinheiten kommuniziert, und bei dem die Steuereinheit dazu konfiguriert ist, wenigstens einen Lautsprecher einer Vielzahl von nicht zugeordneten Lautsprechern für jede der Kommunikationseinheiten auf der Basis der räumlichen Beziehung zwischen dem ersten Fahrzeug (102) und der mit der Audionachricht gekoppelten geographischen Position für jede Kommunikationseinheit zuzuordnen.

6. Kommunikationssystem (100) nach irgendeinem der vorhergehenden Ansprüche, bei dem die entfernt angeordnete Kommunikationseinheit in einem zweiten Kommunikationssystem (100) enthalten ist, das in einem zweiten Fahrzeug (104, 106, 108, 110) angeordnet ist.

7. Kommunikationssystem (100) nach irgendeinem der vorhergehenden Ansprüche, bei dem das Kommunikationssystem (100) eine drahtlose Kommunikationsvorrichtung (206), wie ein Mobiltelefon, für die flexible Verwendung durch ein zweites Fahrzeug aufweist, das mit einem zweiten Kommunikationssystem ausgestaltet ist.

8. Kommunikationssystem (100) nach irgendeinem der vorhergehenden Ansprüche, bei dem die Audionachricht von der Kommunikationseinheit wenigstens eine von einer Sprachnachricht oder einer konvertierten Audiotextnachricht ist.

9. Kommunikationssystem (100) nach irgendeinem der vorhergehenden Ansprüche, bei dem die erhaltene Audionachricht eine Geonachricht (401) ist, die durch eine der Geonachricht (401) zugeordnete Gültigkeitsfrist begrenzt ist.

10. Kommunikationssystem (100) nach irgendeinem der vorhergehenden Ansprüche, bei dem die Steuereinheit eine Audiolautstärkeregelung umfasst, die dazu konfiguriert ist, einen Lautstärkepegel für jeden der Vielzahl von Lautsprechern (202 a-d, 204 a-d) zu regeln, und bei dem die Steuereinheit weiterhin dazu konfiguriert ist, den Lautstärkepegel für jeden der zugeordneten Lautsprecher auf der Basis der räumlichen Beziehung zwischen der geographischen Position des Kommunikationssystems (100) und einer mit der Audionachricht gekoppelten geographischen Position einzustellen.

11. Kommunikationssystem (100) nach irgendeinem der vorhergehenden Ansprüche, bei dem die mit der Audionachricht gekoppelten geographischen Positionen und das erste Fahrzeug (102) durch Koordinaten bestimmt sind, die mittels eines Ortungssystems für die Steuereinheit bereitgestellt werden.

12. Kommunikationssystem (100) nach Anspruch 10, bei dem das Ortungssystem eines von einem Satellitennavigationssystem oder einem mobilen Ortungssystem ist.

13. Verfahren für ein Kommunikationssystem (100), das in einem Fahrzeugraum eines ersten Fahrzeugs (102) angeordnet ist und eine Vielzahl von Lautsprechern (202 a-d, 204 a-d) umfasst, die getrennt voneinander räumlich verteilt sind, wobei das Verfahren zum Verteilen einer Audionachricht an den Fahrer des Fahrzeugs bereitgestellt wird und wobei das Verfahren die Schritte aufweist:
- Empfangen der Audionachricht von einer Kommunikationseinheit, die entfernt von dem ersten Fahrzeug (102) angeordnet ist;
- Bestimmen einer räumlichen Beziehung zwischen der geographischen Position des Kommunikationssystems (100) und einer mit der Audionachricht gekoppelten geographischen Position;
- Bestimmen eines geographischen Vektors des ersten Fahrzeugs (102) auf der Basis der Bewegung des ersten Fahrzeugs (102);
- Zuordnen wenigstens eines der Vielzahl von Lautsprechern (202 a-d, 204 a-d) zum Erzeugen eines gerichteten Tons an den Fahrer in dem Fahrzeugraum (200), wobei die Richtung des Tons der räumlichen Beziehung zwischen dem Kommunikationssystem (100) in dem ersten Fahrzeug und der mit der Audionachricht gekoppelten geographischen Position entspricht; und
- Bereitstellen der Audionachricht an den Fahrer von dem wenigstens einen zugeordneten Lautsprecher, wobei das Kommunikationssystem (100) für eine Zwei-Wege-Kommunikation weiterhin ein Mikrofon umfasst, das für den Empfang einer Audioausgangsnachricht von dem Fahrer des ersten Fahrzeugs (102) konfiguriert ist, und die Steuereinheit weiterhin zum Übertragen der Audioausgangsnachricht an die Kommunikationseinheit konfiguriert ist.

14. Computerprogrammprodukt, das ein computerlesbares Medium umfasst, das darauf Computerprogrammeinrichtungen für ein Kommunikationssystem (100) für einen Fahrzeugraum (200) in einem ersten Fahrzeug (102) gespeichert hat, wobei das Kommunikationssystem (100) eine Vielzahl von Lautsprechern (202 a-d, 204 a-d) umfasst, die räumlich verteilt dazu konfiguriert sind, eine Audionachricht an einen Fahrer in einem Fahrzeug bereitzustellen, wobei das Computerprogrammprodukt umfasst:
- einen Code für das Empfangen der Audionachricht von einer Kommunikationseinheit, die entfernt von dem ersten Fahrzeug (102) angeordnet ist;
- einen Code für das Bestimmen einer räumlichen Beziehung zwischen der geographischen Position des Kommunikationssystems (100) und einer mit der Audionachricht gekoppelten geographischen Position;
- einen Code für das Bestimmen eines geographischen Vektors des ersten Fahrzeugs (102) auf der Basis der Bewegung des ersten Fahrzeugs (102);
- einen Code für das Zuordnen wenigstens eines der Vielzahl von Lautsprechern (202 a-d, 204 a-d) zum Erzeugen eines gerichteten Tons an den Fahrer in dem Fahrzeugraum (200), wobei die Richtung des Tons der räumlichen Beziehung zwischen dem Kommunikationssystem (100) in dem ersten Fahrzeug und der mit der Audionachricht gekoppelten geographischen Position entspricht; und
- einen Code für das Bereitstellen der Audionachricht an den Fahrer von dem wenigstens einen zugeordneten Lautsprecher, wobei das Kommunikationssystem (100) für eine Zwei-Wege-Kommunikation weiterhin ein Mikrofon umfasst, das für den Empfang einer Audioausgangsnachricht von dem Fahrer des ersten Fahrzeugs (102) konfiguriert ist, und die Steuereinheit weiterhin zum Übertragen der Audioausgangsnachricht an die Kommunikationseinheit konfiguriert ist.

## Revendications

1. Système de communication (100) pour un habitacle de véhicule (200) d'un premier véhicule (102), le système de communication (100) étant configuré pour fournir un message audible à un conducteur du premier véhicule (102), où ledit système de communication (100) comprend :
- une pluralité de haut-parleurs (202 a-d, 204 a-d) répartis spatialement en étant espacés les uns des autres à l'intérieur de l'habitacle de véhicule (200) ; et
- une unité de commande pour commander la pluralité de haut-parleurs (202 a-d, 204 a-d), où l'unité de commande étant configurée pour :
- recevoir le message audible en provenance d'une unité de communication agencée à distance du premier véhicule (102) ;
- déterminer une relation spatiale entre la position géographique dudit système de communication (100) dans le premier véhicule et une position géographique couplée audit message audible ;
- attribuer au moins l'un de ladite pluralité de haut-parleurs (202 a-d, 204 a-d) pour générer un son directionnel vers le conducteur à l'intérieur de l'habitacle de véhicule (200), la direction du son correspondant à la relation spatiale entre ledit système de communication (100) dans le premier véhicule et ladite position géographique couplée audit message audible ; et
- fournir au conducteur le message audible provenant dudit au moins un haut-parleur attribué, où le système de communication (100) pour une communication bidirectionnelle comprend en outre un microphone configuré pour recevoir un message de sortie audible du conducteur du premier véhicule (102) et l'unité de commande est en outre configurée pour transmettre le message de sortie audible à ladite unité de communication, où l'unité de commande est en outre configurée pour détecter un vecteur géographique du premier véhicule (102) sur la base du mouvement du premier véhicule (102).

2. Système de communication (100) selon la revendication 1, dans lequel la position géographique couplée audit message audible est déterminée en détectant une position géographique de l'unité de communication.

3. Système de communication (100) selon l'une quelconque de la revendication 1 ou 2, dans lequel l'unité de commande est en outre configurée pour détecter un vecteur géographique de l'unité de communication sur la base du mouvement de l'unité de communication.

4. Système de communication (100) selon la revendication 2, dans lequel l'unité de commande est en outre configurée pour fournir un effet sonore au message audible fourni au conducteur lorsque le premier véhicule (102) et l'unité de communication se croisent sur la base des vecteurs géographiques et des positions géographiques.

5. Système de communication (100) selon l'une quelconque des revendications précédentes, dans lequel ledit système de communication (100) communique avec une pluralité d'unités de communication agencées à distance et dans lequel l'unité de commande est configurée pour attribuer au moins un haut-parleur d'une pluralité de haut-parleurs non attribués pour chacune desdites unités de communication sur la base de la relation spatiale entre ledit premier véhicule (102) et ladite position géographique couplée audit message audible pour chaque unité de communication.

6. Système de communication (100) selon l'une quelconque des revendications précédentes, dans lequel l'unité de communication agencée à distance est comprise dans un deuxième système de communication (100) agencé dans un deuxième véhicule (104, 106, 108, 110).

7. Système de communication (100) selon l'une quelconque des revendications précédentes, dans lequel ledit système de communication (100) comprend un dispositif de communication sans fil (206) tel qu'un téléphone mobile pour une utilisation flexible d'un deuxième véhicule équipé d'un deuxième système de communication.

8. Système de communication (100) selon l'une quelconque des revendications précédentes, dans lequel le message audible provenant de ladite unité de communication est au moins l'un parmi un message vocal et un message texte converti sous une forme audible.

9. Système de communication (100) selon l'une quelconque des revendications précédentes, dans lequel le message audible reçu est un géomessage (401) limité par un terme de validité attribué au géomessage (401).

10. Système de communication (100) selon l'une quelconque des revendications précédentes, dans lequel l'unité de commande comprend une commande de gain audio configurée pour commander un niveau de volume pour chacun de la pluralité de haut-parleurs (202 a-d, 204 a-d) et dans lequel l'unité de commande est en outre configurée pour ajuster le niveau de volume pour chacun desdits haut-parleurs attribués sur la base de la relation spatiale entre la position géographique dudit système de communication (100) et une position géographique couplée audit message audible.

11. Système de communication (100) selon l'une quelconque des revendications précédentes, dans lequel les positions géographiques couplées au message audible et audit premier véhicule (102) sont déterminées par des coordonnées fournies au moyen d'un système de poursuite à l'unité de commande.

12. Système de communication (100) selon la revendication 10, dans lequel le système de poursuite est l'un parmi un système de navigation par satellite ou un système de poursuite mobile.

13. Procédé pour un système de communication (100) agencé dans un habitacle d'un premier véhicule (102) et comprenant une pluralité de haut-parleurs (202 a-d, 204 a-d) répartis spatialement en étant espacés les uns des autres, le procédé étant prévu pour distribuer un message audible à un conducteur du véhicule, le procédé comprenant les étapes consistant :
- à recevoir ledit message audible en provenance d'une unité de communication agencée à distance du premier véhicule (102) ;
- à déterminer une relation spatiale entre la position géographique dudit système de communication (100) et une position géographique couplée audit message audible ;
- à déterminer un vecteur géographique du premier véhicule (102) sur la base du mouvement du premier véhicule (102) ;
- à attribuer au moins l'un de ladite pluralité de haut-parleurs (202 a-d, 204 a-d) pour générer un son directionnel vers le conducteur à l'intérieur de l'habitacle de véhicule (200), la direction du son correspondant à la relation spatiale entre ledit système de communication (100) dans le premier véhicule et ladite position géographique couplée audit message audible ; et
- à fournir au conducteur le message audible provenant dudit au moins un haut-parleur attribué, où le système de communication (100) pour une communication bidirectionnelle comprend en outre un microphone configuré pour recevoir un message de sortie audible du conducteur du premier véhicule (102) et l'unité de commande est en outre configurée pour transmettre le message de sortie audible à ladite unité de communication.

14. Produit de programme informatique comprenant un support lisible par ordinateur sur lequel est stocké un moyen de programme informatique pour un système de communication (100) pour un habitacle de véhicule (200) dans un premier véhicule (102), où le système de communication (100) comprend une pluralité de haut-parleurs (202 a-d, 204 a-d) répartis spatialement configurés pour fournir un message audible à un conducteur dans un véhicule, où le produit de programme informatique comprend :
- un code pour recevoir ledit message audible en provenance d'une unité de communication agencée à distance du premier véhicule (102) ;
- un code pour déterminer une relation spatiale entre la position géographique dudit système de communication (100) et une position géographique couplée audit message audible ;
- un code pour déterminer un vecteur géographique du premier véhicule (102) sur la base du mouvement du premier véhicule (102) ;
- un code pour attribuer au moins l'un de ladite pluralité de haut-parleurs (202 a-d, 204 a-d) pour générer un son directionnel vers le conducteur à l'intérieur de l'habitacle de véhicule (200), la direction du son correspondant à la relation spatiale entre ledit système de communication (100) dans le premier véhicule et ladite position géographique couplée audit message audible ; et
- un code pour fournir au conducteur le message audible provenant dudit au moins un haut-parleur attribué, où le système de communication (100) pour une communication bidirectionnelle comprend en outre un microphone configuré pour recevoir un message de sortie audible du conducteur du premier véhicule (102) et l'unité de commande est en outre configurée pour transmettre le message de sortie audible à ladite unité de communication.
